# FASCICULE DE BREVET EUROPEEN

(11) **EP 2 481 671 B1**
(45) Date de publication et mention de la délivrance du brevet: **24.06.2015**
(21) Numéro de dépôt: 12000079.9
(22) Date de dépôt: 09.01.2012
(51) Int. Cl.: B64D 1/22

(54) **Dispositif de fixation amovible muni d'un moyen d'accrochage d'une charge externe et d'un moyen de fixation dudit moyen d'accrochage à un aéronef, aéronef et procédé associés**
Abnehmbare Befestigungsvorrichtung mit einem Befestigungsmittel für eine externe Last und einer Einrichtung zum Anbringen des Befestigungsmittels an einem Flugzeug, Flugzeug und zugehöriges Verfahren
Removable fastening device with an attachment means of an external load and a means of fixing said attachment means to an aircraft, aircraft and associated method

(30) Priorité: 27.01.2011 FR 1100243
(43) Date de publication de la demande: 01.08.2012
(73) Titulaire: Airbus Helicopters, 13725 Marignane Cedex (FR)
(72) Inventeur: Figoureux, David, 13300 Salon de Provence (FR); Gaillard, Christophe, 13640 La Roque d'Antheron (FR); Jimenez, Florian, 13100 Aix en Provence (FR); Szymanski, Eric, 13220 chateauneuf les Martigues (FR)
(74) Mandataire: GPI & Associés

(56) Documents cités:
- GB-A- 890 178
- US-A- 3 044 818
- US-A- 4 138 078
- US-A- 5 499 785
- US-A- 5 850 991

## Description

La présente invention concerne un dispositif de fixation amovible muni d'un moyen d'accrochage d'une charge externe et d'un moyen de fixation dudit moyen d'accrochage à un aéronef, un aéronef muni d'un tel dispositif et un procédé associé.

Le domaine technique de l'invention est donc celui des dispositifs de fixation d'une charge externe à un aéronef, et notamment un aéronef muni d'une voilure tournante.

Classiquement, un aéronef comporte une structure dite par commodité structure porteuse pour porter un équipement optionnel, la structure porteuse pouvant être le fuselage de cet aéronef ou une ailette d'emport par exemple. L'aéronef peut alors être pourvu d'un dispositif de fixation amovible d'une charge externe comprenant un moyen d'accrochage et un moyen de fixation de ce moyen d'accrochage sous la structure porteuse.

A titre d'exemple, le moyen d'accrochage peut être un moyen d'accrochage de type crochet-délesteur tournant ou non tournant fixé à la structure porteuse de ce giravion par un moyen de fixation. Une élingue est alors accrochée à ce crochet-délesteur afin de permettre l'emport de charges externes lourdes.

Le moyen de fixation d'un tel crochet-délesteur peut comprendre :
- un premier moyen dénommé parfois « sling » en langue anglaise, ce premier moyen est du type cardan en étant muni de deux axes de pivotement orthogonaux entre eux,
- un deuxième moyen dénommé parfois « swing » en langue anglaise, ce deuxième moyen comportant un cadre suspendu à la structure porteuse par quatre câbles de suspension par exemple,
- un troisième moyen mettant en oeuvre une poutre à laquelle est accroché l'équipement, la poutre étant généralement fixée en deux points à la structure porteuse, et,
- un quatrième moyen mettant en oeuvre une perche fixée sur la boîte de transmission de puissance principale du giravion, un équipement étant articulé à cette perche.

En outre, le moyen d'accrochage saillant de la structure porteuse, il est utile de prévoir une protection en cas de crash notamment pour éviter que le dispositif amovible et notamment le moyen d'accrochage endommage la structure porteuse.

De plus, on comprend que le moyen de fixation et le moyen d'accrochage génèrent conjointement une traînée aérodynamique en vol tendant à pénaliser la vitesse de l'aéronef ou la consommation de carburant de cet aéronef en vol. Cette traînée aérodynamique perturbatrice est d'autant plus gênante lorsqu'aucune charge externe n'est portée par ledit moyen d'accrochage.

L'état de la technique comprend notamment le document US 5 850 991, le document US 4 138 078, le document GB 890 178, et le document FR 1 379 420.

Le document US 5 850 991 présente un dispositif amovible comprenant un moyen d'accrochage et un moyen de fixation de l'équipement, à savoir respectivement un crochet-délesteur fixé à une poutre par une articulation.

La poutre est articulée à l'intérieur d'un caisson afin que le dispositif amovible puisse être masqué dans ledit caisson. Dans une première position déployée, le crochet-délesteur permet d'arrimer une charge. A l'inverse, dans une deuxième position pivotée le dispositif est entièrement contenu dans le caisson pour ne pas saillir de la structure porteuse de l'aéronef en étant maintenu par un moyen dédié.

Le document US 4 138 078 présente un moyen de guidage d'un crochet-délesteur portant une charge.

Le document GB 890 178 montre un crochet-délesteur attaché sous un aéronef par des barres articulées à une structure porteuse.

Le document FR 1 379 420 présente un ensemble de fixations dont chacune peut être abaissée ou montée indépendamment.

On connaît aussi le document US 3 044 818, et le document US 5 499 785, qui est considéré l'état de la technique le plus proche.

La présente invention a alors pour objet de proposer un dispositif de fixation muni d'un moyen d'accrochage et d'un moyen de fixation dudit moyen d'accrochage sous une structure porteuse d'un aéronef, ce dispositif de fixation permettant d'au moins limiter les risques de dégradations de la structure porteuse provoquées par le dispositif de fixation en cas de crash de l'aéronef et d'au moins limiter sa traînée aérodynamique lorsque le moyen d'accrochage ne porte aucune charge.

Selon l'invention, un dispositif de fixation est muni d'un moyen d'accrochage d'une charge externe et d'un moyen de fixation du moyen d'accrochage à une structure porteuse d'un aéronef, le moyen de fixation étant pourvu d'une poutre de soutènement et d'un moyen d'ancrage de la poutre de soutènement à une structure porteuse.

De plus, le dispositif de fixation comporte:
- une première liaison mécanique reliant la poutre de soutènement au moyen d'ancrage pour permettre un pivotement de la poutre de soutènement autour d'un premier axe de pivotement,
- un moyen de liaison articulé par une deuxième liaison mécanique à la poutre de soutènement pour permettre un pivotement autour d'un deuxième axe de pivotement parallèle au premier axe de pivotement de la poutre de soutènement par rapport au moyen de liaison, une troisième liaison mécanique articulant le moyen d'accrochage au moyen de liaison pour permettre un pivotement autour d'un troisième axe de pivotement parallèle au premier axe de pivotement du moyen d'accrochage par rapport au moyen de liaison,
- la poutre de soutènement et le moyen d'accrochage étant alignés dans une position dépliée obtenue automatiquement lorsque le moyen d'accrochage porte une charge externe, le dispositif de fixation comporte un moyen de repliage automatique pour requérir en l'absence d'un effort prédéterminé exercé par une charge sur le moyen d'accrochage le pivotement de la poutre de soutènement selon un premier sens par rapport à une structure porteuse et le pivotement du moyen d'accrochage par rapport au moyen de liaison selon un deuxième sens opposé au premier sens.

Ainsi, lorsque l'on accroche une charge externe d'une masse supérieure à une masse seuil donnée au moyen d'accrochage, cette charge externe exerce un effort supérieur ou égal audit effort prédéterminé selon une direction en élévation. Le dispositif de fixation se trouve alors dans une position dépliée le long d'une direction donnée et saille de la structure porteuse sur une première distance.

A l'inverse, en l'absence d'une telle charge externe, le moyen de repliage automatique maintient le dispositif de fixation dans une position repliée, le dispositif de fixation étant replié sur lui-même afin de saillir de la structure porteuse sur une deuxième distance réduite, inférieure à ladite première distance.

La garde au sol séparant le moyen d'accrochage du sol est donc minimisée. Lors d'un crash, la probabilité d'avoir un contact entre le moyen d'accrochage et le sol susceptible d'induire une détérioration de la structure porteuse est donc réduite voire nulle.

De même, en vol, la traînée aérodynamique du dispositif de fixation est réduite en l'absence de charge externe.

Ainsi, l'invention propose un dispositif de fixation simple ne nécessitant pas l'implémentation d'un caisson de réception du dispositif dans la structure porteuse, mais générant toutefois une traînée aérodynamique limitée et présentant un danger réduit pour la structure porteuse en cas de crash.

Ce dispositif de fixation peut de plus comporter une ou plusieurs des caractéristiques additionnelles qui suivent.

Par exemple, la poutre de soutènement peut être contenue dans un premier plan parallèle à un deuxième plan contenant le moyen d'accrochage dans une position repliée du dispositif de fixation. Cette caractéristique permet d'obtenir un encombrement intéressant dans la position repliée.

Par ailleurs, le moyen d'accrochage est éventuellement à choisir dans une liste contenant un crochet-délesteur, un crochet d'élingue et une attache. Dans le cadre de l'utilisation d'une attache, cette attache peut optionnellement permettre la fixation d'un phare sous la structure porteuse.

En outre, le dispositif de fixation comporte favorablement au moins un moyen d'arrêt d'un organe mobile de ce dispositif de fixation à choisir parmi la sélection suivante :
- une première butée pour limiter la liberté de mouvement en rotation du moyen de liaison par rapport à ladite poutre de soutènement,
- une deuxième butée pour limiter la liberté de mouvement en rotation du moyen d'accrochage par rapport au moyen de liaison,
- une troisième butée pour limiter la liberté de mouvement en rotation de la poutre de soutènement par rapport au moyen d'ancrage.

Il est à noter que les butées peuvent être de butées rigides ou encore des butées souples, du type amortisseur par exemple.

Selon un autre aspect, le moyen de repliage automatique comprend un moyen de rappel pour ordonner le pivotement de la poutre de soutènement selon une première vitesse de rotation et un organe de rappel pour requérir le pivotement du moyen d'accrochage selon une deuxième vitesse de rotation inférieure à la première vitesse de rotation.

Le repliage du dispositif de fixation s'effectue alors dans des conditions clairement définies pour par exemple éviter un blocage du dispositif de fixation.

Selon un autre aspect, la première liaison mécanique peut comporter d'une part un premier organe de fixation coopérant avec une première extrémité de la poutre de soutènement et avec un premier organe d'ancrage du moyen d'ancrage, et d'autre part un deuxième organe de fixation coopérant avec une deuxième extrémité de la poutre de soutènement et avec un deuxième organe d'ancrage du moyen d'ancrage, au moins un organe de fixation comportant un moyen de rappel du moyen de repliage automatique pour ordonner le pivotement de la poutre de soutènement en l'absence dudit effort prédéterminé.

Le moyen de rappel comprend éventuellement au moins un des éléments suivants : au moins un ressort de torsion, une première bielle à fluide sous pression.

Par suite, la première liaison mécanique induit une rotation de la poutre de soutènement en l'absence d'une charge externe portée par le moyen d'accrochage.

Selon une variante, au moins un des deux organes de fixation permettant d'attacher la poutre de soutènement aux organes d'ancrage comprend un ressort de torsion. Le ressort de torsion tend naturellement à requérir la rotation de la poutre de soutènement pour amener le dispositif de fixation dans la position repliée.

Selon une autre variante, au moins un organe de fixation comprend un levier articulé à une première bielle à fluide sous pression. Lorsqu'une charge externe est attachée au moyen d'accrochage, la première bielle à fluide sous pression s'étend, la pression du fluide de cette première bielle à fluide sous pression n'étant pas suffisante pour rétracter la première bielle à fluide sous pression.

Par contre, en l'absence de ladite charge externe, la première bielle à fluide sous pression se rétracte.

Par ailleurs, le moyen de liaison comporte éventuellement une première bielle de liaison et une deuxième bielle de liaison articulées à la poutre de soutènement respectivement par un premier axe de fixation et un deuxième axe de fixation de la deuxième liaison mécanique, chaque bielle de liaison comportant un moyen d'articulation de la troisième liaison mécanique pour porter conjointement le moyen d'accrochage.

Le moyen de liaison est alors un moyen simple autorisant les rotations requises de la poutre de soutènement et du moyen d'accrochage.

Par ailleurs, le moyen de repliage automatique peut comporter au moins un organe de rappel pour requérir le pivotement du moyen d'accrochage par rapport au moyen de liaison selon un deuxième sens en l'absence dudit effort prédéterminé.

Selon une réalisation, un organe de rappel comprend un ressort de torsion coopérant avec le moyen de liaison et le moyen d'accrochage.

Selon une réalisation alternative, un organe de rappel comprend une deuxième bielle à fluide sous pression fixée à la poutre de soutènement, chaque deuxième bielle à fluide sous pression étant reliée par un élément longiligne à un galet du troisième moyen de liaison solidarisé au moyen d'accrochage.

En l'absence d'une charge externe, chaque deuxième bielle à fluide sous pression se rétracte. Dès lors, la deuxième bielle à fluide sous pression déplace l'élément longiligne en le rapprochant de la poutre de soutènement. Cet élément longiligne exerce ainsi un effort de traction sur le galet entraînant la rotation du moyen d'accrochage autour du troisième axe de pivotement.

Chaque galet est alors éventuellement un cylindre à rayon variable muni d'au moins un premier rayon et un deuxième rayon, l'élément longiligne étant en contact avec le premier rayon lors d'une première phase de repliage et avec le deuxième rayon lors d'une deuxième phase de repliage, le premier rayon étant inférieur au deuxième rayon. En fonction de la phase de repliage, le moyen d'accrochage pivote alors à des vitesses de rotation différentes.

Le galet peut avoir une forme de goutte d'eau ou encore elliptique par exemple.

Selon un autre aspect, l'invention vise un aéronef muni du dispositif de fixation possédant une ou plusieurs des caractéristiques énoncées précédemment.

Cet aéronef est alors muni d'une structure porteuse s'étendant longitudinalement d'une extrémité avant vers une extrémité arrière et latéralement d'un premier côté vers un deuxième côté, l'aéronef ayant un dispositif de fixation pourvu d'un moyen d'accrochage et d'un moyen de fixation du moyen d'accrochage à ladite structure porteuse.

L'aéronef est alors notamment remarquable en ce que, le dispositif de fixation étant du type décrit précédemment, le moyen de fixation est pourvu d'une poutre de soutènement et d'un moyen d'ancrage de la poutre de soutènement à la structure porteuse, le moyen de fixation comportant :
- une première liaison mécanique reliant la poutre de soutènement au moyen d'ancrage pour permettre un pivotement de la poutre de soutènement autour d'un premier axe de pivotement par rapport à la structure porteuse,
- un moyen de liaison articulé par une deuxième liaison mécanique à la poutre de soutènement pour permettre un pivotement autour d'un deuxième axe de pivotement parallèle au premier axe de pivotement de la poutre de soutènement par rapport au moyen de liaison, une troisième liaison mécanique articulant le moyen d'accrochage au moyen de liaison pour permettre un pivotement autour d'un troisième axe de pivotement parallèle au premier axe de pivotement du moyen d'accrochage par rapport au moyen de liaison,
- la poutre de soutènement et le moyen d'accrochage étant alignés dans une position dépliée obtenue automatiquement lorsque le moyen d'accrochage porte une charge externe, le dispositif de fixation comporte un moyen de repliage automatique pour requérir en l'absence d'un effort prédéterminé exercé par une charge sur le moyen d'accrochage le pivotement de la poutre de soutènement selon un premier sens par rapport à une structure porteuse et le pivotement du moyen d'accrochage par rapport au moyen de liaison selon un deuxième sens opposé au premier sens, la poutre de soutènement étant contenue dans une premier plan parallèle à un deuxième plan contenant le moyen d'accrochage dans une position repliée.

Par ailleurs, l'invention vise aussi un procédé d'optimisation de l'encombrement et de la traînée aérodynamique d'un dispositif de fixation du type décrit précédemment muni notamment d'un moyen d'ancrage, d'une poutre de soutènement, d'une moyen de liaison et d'un moyen d'accrochage.

Au cours de ce procédé, la poutre de soutènement et le moyen d'accrochage étant alignés dans une position dépliée lorsque le moyen d'accrochage porte une charge externe d'une masse supérieure à une masse seuil donnée, en l'absence de la charge externe on pivote la poutre de soutènement selon un premier sens à une première vitesse de rotation et on pivote le moyen d'accrochage selon un deuxième sens à une deuxième vitesse de rotation inférieure à ladite première vitesse de rotation, le premier sens étant opposé au deuxième sens.

Par exemple :
- durant une première phase, on pivote simultanément la poutre de soutènement, le moyen de liaison et le moyen d'accrochage jusqu'à ce que le moyen de liaison atteigne une première butée,
- durant une deuxième phase, on pivote simultanément la poutre de soutènement et le moyen d'accrochage jusqu'à ce que le moyen d'accrochage atteigne une deuxième butée, et
- durant une troisième phase, on pivote la poutre de soutènement jusqu'à ce que ladite poutre de soutènement atteigne une troisième butée.

L'invention et ses avantages apparaîtront avec plus de détails dans le cadre de la description qui suit avec des exemples de réalisation donnés à titre illustratif en référence aux figures annexées qui représentent :
- les figures 1 et 2, des vues d'un premier mode de réalisation en position dépliée,
- les figures 3 et 4, des vues d'un premier mode de réalisation durant une phase de repliage,
- les figures 5 et 6, des vues d'un premier mode de réalisation en position repliée,
- les figures 7 à 10, des vues présentant un deuxième mode de réalisation en position repliée, et
- la figure 11, une vue présentant un troisième mode de réalisation.

Les éléments présents dans plusieurs figures distinctes sont affectés d'une seule et même référence.

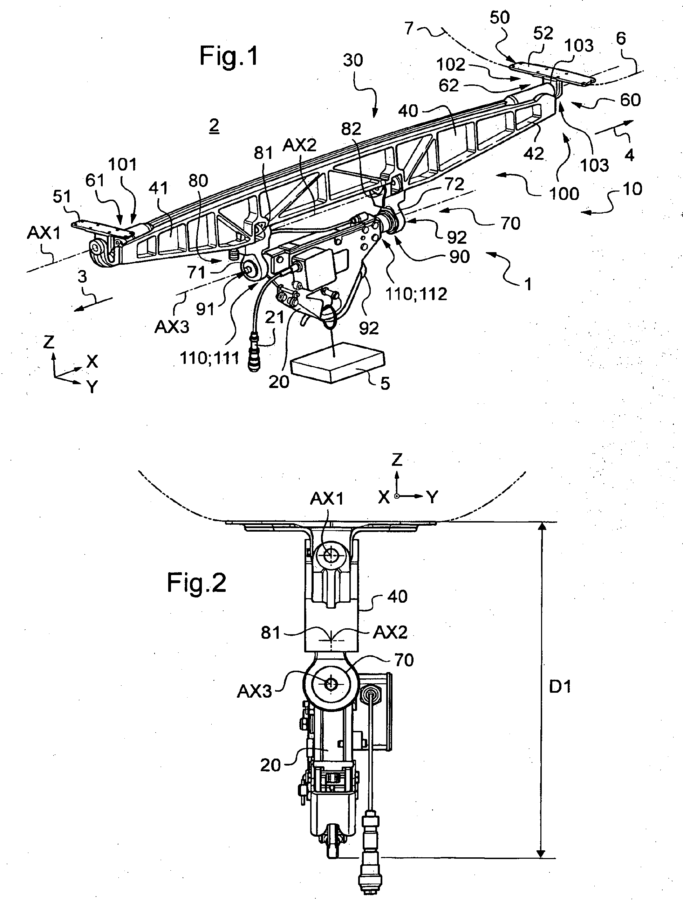

On note que trois directions X, Y et Z orthogonales les unes par rapport aux autres sont représentées sur les figures 1 et 2.

La direction X est dite longitudinale dans la mesure où l'aéronef présenté s'étend longitudinalement selon cette direction. Le terme « longitudinal » est relatif à cette direction longitudinale X. La direction longitudinale X est au moins parallèle à l'axe de roulis de l'aéronef.

Une autre direction Y est dite transversale. Le terme « transversal » est relatif à cette direction transversale Y. La direction transversale Y est au moins parallèle à l'axe de tangage de l'aéronef.

Enfin, une troisième direction Z est dite d'élévation. La direction en élévation Z est au moins parallèle à l'axe de lacet de l'aéronef.

Les figures 1 à 11 présentent des modes de réalisation préférés de l'invention.

Indépendamment du mode de réalisation, en référence à la figure 1, un aéronef 1 comprend une structure porteuse 2. Cette structure porteuse s'étend longitudinalement selon une direction parallèle à la direction longitudinale X d'une extrémité avant 3 vers une extrémité arrière 4, et transversalement selon une direction parallèle à la direction transversale Y d'un premier côté 6 vers un deuxième côté 7.

La structure porteuse 2 représente avantageusement le fuselage de l'aéronef, mais peut éventuellement représenter un bras d'emport, voire une aile par exemple.

L'aéronef 1 est équipé d'un dispositif de fixation 10 pour porter une charge externe 5, à savoir une charge ne faisant pas partie de l'aéronef 1.

Ce dispositif de fixation 10 comprend alors un moyen d'accrochage 20 pour porter la charge externe 5 et un moyen de fixation 30 du moyen d'accrochage 20 sous une structure porteuse 2 de l'aéronef 1.

Le moyen d'accrochage 20 peut être un crochet-délesteur du type décrit dans l'état de la technique. On note que les figures 1 à 6 et 11 font apparaître un harnais électrique 21 de connexion à un moyen de commande du crochet-délesteur. Par commodité et pour ne pas alourdir les figures, le harnais électrique présenté n'est pas relié à son moyen de commande. On se référera à la littérature pour obtenir plus d'informations sur un crochet-délesteur. Le moyen d'accrochage 20 peut aussi être un crochet d'élingue ou plus généralement un dispositif d'attache d'une charge, un phare par exemple.

Par ailleurs, le moyen de fixation 30 est pourvu d'une poutre de soutènement 40 fixée de manière amovible à la structure porteuse 2 par un moyen d'ancrage 50, une première liaison mécanique 60 de type liaison pivot par exemple reliant la poutre de soutènement 40 au moyen d'ancrage.

Cette première liaison mécanique 60 a notamment pour fonction de laisser une liberté de mouvement à la poutre de soutènement en rotation autour d'un premier axe de pivotement AX1. Dès lors, la première liaison mécanique 60 permet à la poutre de soutènement d'effectuer une rotation autour de ce premier axe de pivotement AX1. On verra par la suite qu'une telle rotation est provoquée par un moyen de repliage 100 ou par la charge externe.

Selon le moyen de fixation représenté, le moyen d'ancrage 50 inclut un premier organe d'ancrage 51 et un deuxième organe d'ancrage 52 fixés à la structure porteuse 2, par des vis par exemple.

La poutre de soutènement 40 s'étendant d'une première extrémité 41 vers une deuxième extrémité 42, la première liaison mécanique 60 est pourvue d'un premier organe de fixation 61 coopérant avec le premier organe d'ancrage 51 et la première extrémité 41 et d'un deuxième organe de fixation 62 coopérant avec le deuxième organe d'ancrage 52 et la deuxième extrémité 42.

Chaque organe de fixation peut comprendre un axe de liaison inséré dans un orifice du moyen d'ancrage correspondant, ainsi que des éléments de fixation dudit axe de liaison à la poutre de soutènement 40. Les axes de liaison des organes de fixation sont alors disposés le long du premier axe de pivotement AX1. Chaque organe de fixation peut comprendre des paliers ou roulements non représentés.

Selon un autre aspect, le dispositif de fixation 10 est muni d'un moyen de liaison 70 reliant la poutre de soutènement 40 et le moyen d'accrochage 20, le moyen de liaison 70 permettant d'attacher le moyen d'accrochage 20 à la poutre de soutènement 40.

Ce moyen de liaison 70 est alors d'une part articulé à la poutre de soutènement par une deuxième liaison mécanique 80 de type liaison pivot par exemple et d'autre part articulé au moyen d'accrochage 20 par une troisième liaison mécanique 90 de type liaison pivot par exemple

La deuxième liaison mécanique 80 a notamment pour fonction de laisser une liberté de mouvement à la poutre de soutènement par rapport au moyen de liaison en rotation autour d'un deuxième axe de pivotement AX2. Dès lors, la deuxième liaison mécanique 80 permet à la poutre de soutènement d'effectuer une rotation autour du deuxième axe de pivotement AX2 par rapport au moyen de liaison 70.

De même, la troisième liaison mécanique 80 a notamment pour fonction de laisser une liberté de mouvement au moyen d'accrochage par rapport au moyen de liaison en rotation autour d'un troisième axe de pivotement AX3. Dès lors, la troisième liaison mécanique 90 permet au moyen d'accrochage d'effectuer une rotation autour du troisième axe de pivotement AX3 par rapport au moyen de liaison 60.

Les premier, deuxième et troisième axes de pivotement AX1, AX2, AX3 présentés sont parallèles deux à deux. De plus, les premier, deuxième et troisième axes de pivotement AX1, AX2, AX3 peuvent s'étendre longitudinalement, voire transversalement.

Par exemple, le moyen de liaison comporte une première bielle de liaison 71 et une deuxième bielle de liaison 72 qui sont articulées à la poutre de soutènement 40 respectivement par un premier axe de fixation 81 et un deuxième axe de fixation 82 de la deuxième liaison mécanique 80, tels que des axes de fixation d'un type usuel.

De plus, chaque bielle de liaison 71, 72 comporte un moyen d'articulation 91, 92 de la troisième liaison mécanique 90 pour porter conjointement le moyen d'accrochage 20. Chaque moyen d'articulation peut éventuellement posséder un axe d'articulation solidaire du moyen d'accrochage 20 traversant un orifice d'une bielle de liaison.

Il est à noter que la première bielle de liaison 71 et la deuxième bielle de liaison 72 peuvent être liées voire fabriquées d'un seul tenant pour assurer l'alignement des moyens d'articulation 91, 92.

En outre, le moyen de fixation inclut un moyen de repliage 100 automatique pour requérir le repliage du dispositif de fixation 10 dans une position repliée en l'absence d'une charge externe 5, et autoriser le dépliage du dispositif de fixation 10 dans une position dépliée lorsque le moyen d'accrochage 20 supporte une charge externe 5.

En référence aux figures 1 et 2, lorsque l'on attache une charge externe 5 ayant une masse supérieure à une masse seuil donnée au moyen d'accrochage 20, cette charge externe exerce un effort sur le dispositif de fixation 10 supérieur ou égal à un effort prédéterminé.

La poutre de soutènement 40, le moyen de liaison 70 et le moyen d'accrochage sont alors alignés. En référence à la figure 2, on note que dans cette position dépliée, le dispositif de fixation saille de la structure porteuse sur une première distance D1.

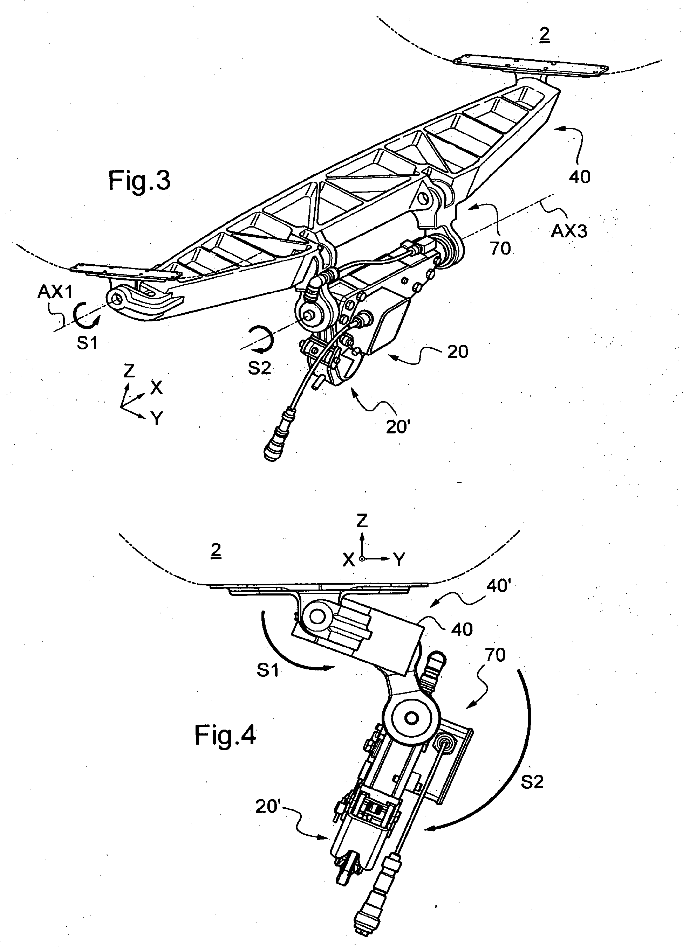

Lorsque l'on détache la charge externe 5, le dispositif de fixation 10 ne subit plus un effort supérieur ou égal à un effort prédéterminé. En référence aux figures 3 et 4, le moyen de repliage 100 requiert alors automatiquement une rotation de la poutre de soutènement 40 selon un premier sens S1 autour du premier axe de pivotement AX1, et une rotation du moyen d'accrochage 20 selon un deuxième sens S2 opposé au premier sens S1 autour du troisième axe de pivotement AX3. Le moyen de liaison reste sensiblement dans la même position mais se rapproche de la structure porteuse.

Par suite, la portion 40' de la poutre de soutènement 40 liée au moyen de liaison 70 et la portion 20' du moyen d'accrochage 20 non liée au moyen de liaison 70 se rapprochent de la structure porteuse 2.

On note que selon un procédé, le moyen de repliage 100 peut pivoter la poutre de soutènement 40 selon un premier sens S1 à une première vitesse de rotation et peut pivoter le moyen d'accrochage 20 selon un deuxième sens S2 opposé au premier sens S1 à une deuxième vitesse de rotation inférieure à ladite première vitesse de rotation.

Par ailleurs, selon la cinématique présentée sur les figures 3 à 4, le moyen de liaison reste sensiblement dans la même position en se rapprochant de la structure porteuse. Toutefois, on comprend que ce moyen de liaison peut éventuellement pivoter par rapport à la poutre de soutènement.

De plus, il est possible d'implémenter un moyen d'arrêt non représenté sur les figures comprenant :
- au moins une première butée pour limiter la liberté de mouvement éventuel en rotation du moyen de liaison par rapport à la poutre de soutènement, et / ou
- au moins une deuxième butée pour limiter la liberté de mouvement en rotation du moyen d'accrochage par rapport au moyen de liaison, et / ou
- au moins une troisième butée pour limiter la liberté de mouvement en rotation de la poutre de soutènement par rapport au moyen d'ancrage.

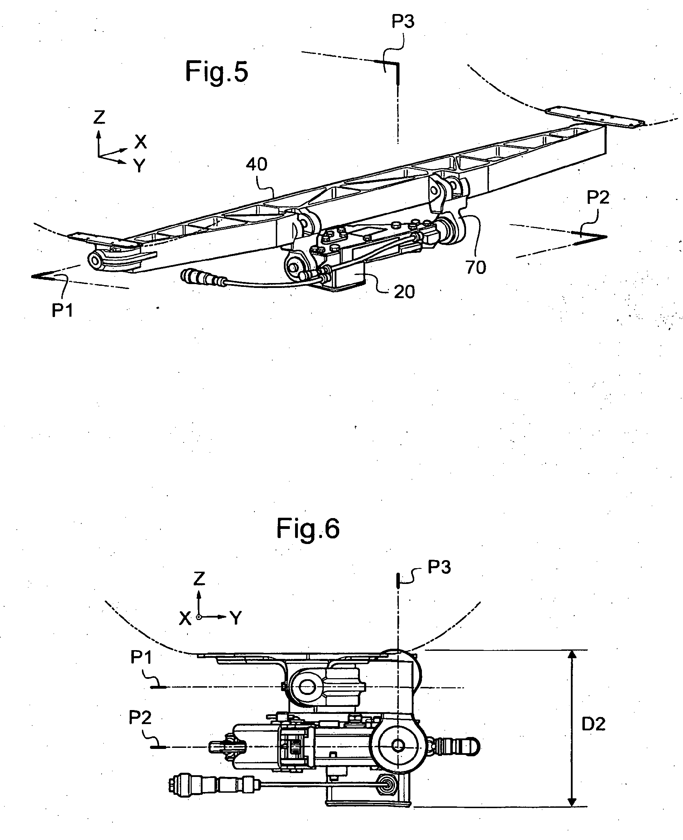

En référence aux figures 5 et 6, à l'issue du repliage, le dispositif de fixation se trouve dans une position repliée.

Selon l'exemple représenté, la poutre de soutènement est alors agencée dans un premier plan P1 parallèle à un deuxième plan P2 contenant le moyen d'accrochage 20. A l'inverse, le moyen de liaison 70 est contenu dans un troisième plan P3 sensiblement orthogonal au premier plan P1 et au deuxième plan P2.

De plus, le dispositif de fixation saille de la structure porteuse sur une deuxième distance D2 inférieure à la première distance D1 précitée.

A partir de cette position repliée, lorsque l'on attache au moyen d'accrochage 20 une charge externe 5 d'une masse supérieure à une masse seuil donnée, cette charge externe exerce un effort supérieur ou égal audit effort prédéterminé selon une direction en élévation. Le moyen de repliage 100 ne peut alors pas maintenir la position repliée. Le dispositif de fixation passe donc dans la position dépliée précitée.

Par ailleurs, pour ordonner le repliage du dispositif de fixation, au moins un organe de fixation 61, 62 inclut un moyen de rappel 101, 102 du moyen de repliage 100 automatique pour ordonner le pivotement de ladite poutre de soutènement 40 lorsque cette poutre de soutènement est soumise à un effort de traction inférieur à un effort prédéterminé, à savoir un effort de traction résultant uniquement du poids du moyen de liaison et du moyen d'accrochage.

Chaque moyen de rappel coopère d'une part avec la poutre de soutènement et d'autre part avec un organe fixe en rotation par rapport à cette poutre de soutènement, le moyen d'ancrage 50 ou la structure porteuse par exemple.

Ainsi, le premier organe de fixation 61 et le deuxième organe de fixation 62 peuvent chacun être muni d'un moyen de rappel.

De même, le moyen de repliage 100 automatique comporte au moins un organe de rappel 110 coopérant avec le moyen d'accrochage pour requérir le pivotement du moyen d'accrochage 20 par rapport au moyen de liaison 70 selon un deuxième sens S2 lorsque le moyen d'accrochage est soumis à un effort de traction inférieur à un effort prédéterminé, à savoir un effort de traction résultant uniquement du poids du moyen d'accrochage.

Le moyen de rappel et l'organe de rappel sont réglés pour induire des vitesses de rotation prédéterminées des éléments associés.

Selon la première réalisation représentée sur la figure 1, au moins un moyen de rappel 101, 102 est un ressort de torsion 103 reliant la poutre de soutènement 40 au moyen d'ancrage, ledit ressort de torsion tendant à rapprocher la poutre de soutènement 40 de la structure porteuse 2.

Par exemple, le premier organe de fixation 61 comporte un premier ressort de torsion en prise sur la première extrémité 41 de la poutre de soutènement 40 et le premier organe d'ancrage 51, le deuxième organe de fixation 62 comportant un deuxième ressort de torsion en prise sur la deuxième extrémité 42 de la poutre de soutènement 40 et le deuxième organe d'ancrage 52.

De même, chaque organe de rappel 110 comprend au moins un ressort de torsion reliant le moyen d'accrochage 20 et le moyen de liaison 70, ledit ressort de torsion de l'organe de rappel tendant à rapprocher le moyen d'accrochage 20 de la poutre de soutènement 40 et de la structure porteuse 2.

Par exemple, un premier organe de rappel 110 comporte un premier ressort de torsion 111 en prise sur une première zone extrémale du moyen d'accrochage 20 et la première bielle de liaison 71. De plus, un deuxième organe de rappel 110 peut comprendre un deuxième ressort de torsion 112 en prise sur une deuxième zone extrémale du moyen d'accrochage 20 et la deuxième bielle de liaison 72.

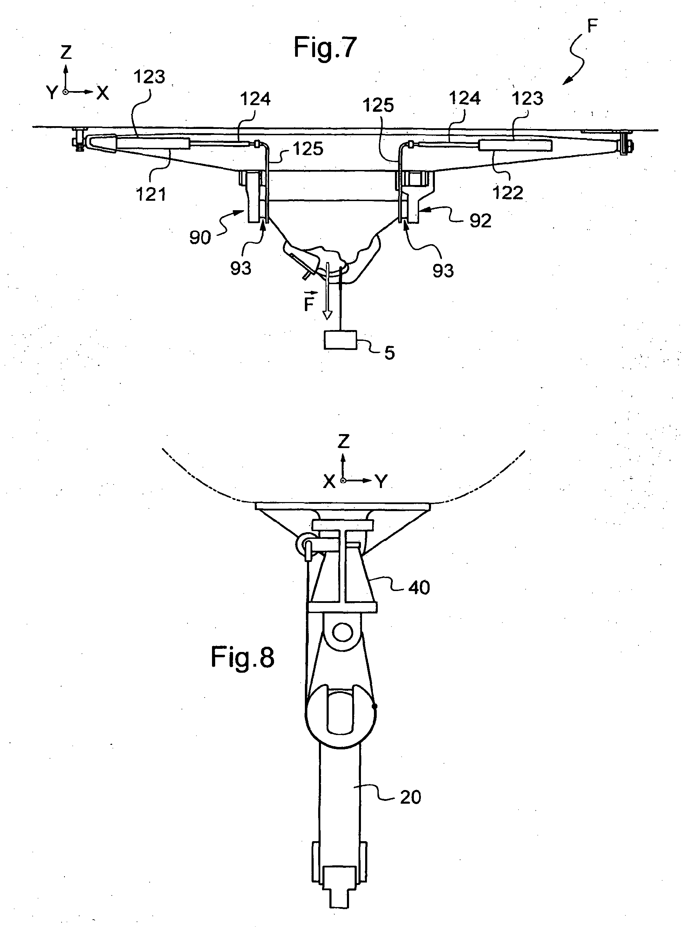

Selon la deuxième réalisation représentée sur la figure 7, au moins un moyen de rappel 101, 102 est un ressort de torsion reliant la poutre de soutènement 40 au moyen d'ancrage. Par exemple, deux moyens de rappel de type ressort de torsion coopèrent avec la poutre de soutènement, à l'instar de la première réalisation schématisée.

Par contre, chaque organe de rappel comprend une deuxième bielle à fluide sous pression 121, 122 fixée à la poutre de soutènement 40, selon une direction longitudinale par exemple.

Chaque deuxième bielle à fluide sous pression comprend un premier corps 123 et un deuxième corps 124. Un fluide sous pression est inséré entre le premier corps 123 et le deuxième corps 124, du gaz ou un liquide par exemple.

Le premier corps 123 d'une deuxième bielle à fluide sous pression est lié à un élément distinct du moyen d'accrochage, la structure porteuse 2 ou la poutre de soutènement selon la variante préférée de la figure 7. Dès lors le deuxième corps 124 est relié par un élément longiligne 125 de type câble ou équivalent à un galet 93 du troisième moyen de liaison 90, chaque galet 93 étant solidaire en rotation du moyen d'accrochage 20 autour du troisième axe de pivotement AX3.

Les galets présentés sont des cylindres à rayon constant. Toutefois, chaque galet peut avoir une forme complexe en étant par exemple de la forme d'un cylindre à rayon variable, un cylindre ayant des bases elliptiques par exemple.

Lorsque l'on attache une charge externe 5 au moyen d'accrochage 20, cette charge externe 5 exerce un effort F sur le dispositif de fixation 10. Cet effort étant supérieur à un effort prédéterminé correspondant à la pression du fluide des deuxièmes bielles à fluide sous pression, chaque deuxième bielle à fluide sous pression s'étend, les corps de chaque deuxième bielle à fluide sous pression s'éloignant l'un de l'autre.

Il en résulte une rotation du moyen d'accrochage 20 par rapport au moyen de liaison 70. En parallèle, la poutre de soutènement effectue une rotation autour du premier axe de pivotement AX1.

Le dispositif de fixation est alors dans la position dépliée représentée sur la figure 7.

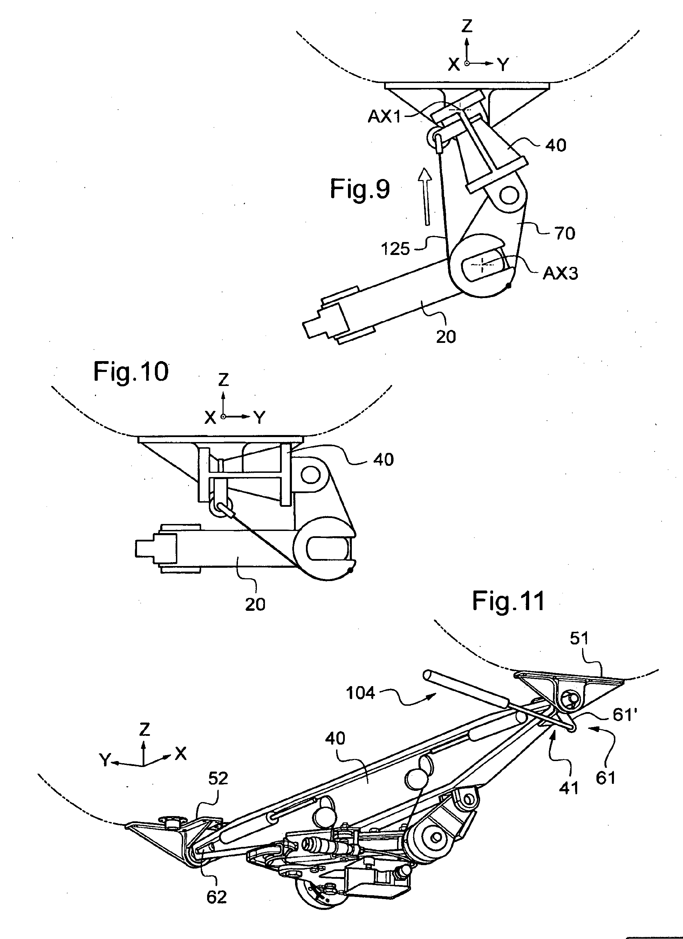

En référence à la figure 9, suite à la libération de la charge externe, la pression du fluide de chaque deuxième bielle à fluide sous pression tend à rétracter cette deuxième bielle à fluide sous pression, un des corps de la deuxième bielle à fluide sous pression coulissant à l'intérieur de l'autre corps de la deuxième bielle à fluide sous pression.

Les éléments longilignes 125 sont alors déplacés par les deuxièmes bielles à fluide sous pression selon la flèche F1. Chaque élément longiligne 125 étant solidaire d'un galet 93 fixé au moyen d'accrochage 20, il en résulte une rotation du moyen d'accrochage autour du troisième axe de pivotement AX3.

En parallèle, la poutre de soutènement effectue une rotation autour du premier axe de pivotement AX1 sous l'effet des moyens de rappel.

On note que le moyen de liaison 70 peut soit rester dans une position inchangée tout en se rapprochant de la structure porteuse, soit effectuer une rotation sous l'effet du mouvement conjoint de la poutre de soutènement et du moyen d'accrochage comme le montre la figure 9. La troisième vitesse de rotation du moyen de liaison par rapport à la poutre de soutènement est par exemple supérieure à la première vitesse de rotation de la poutre de soutènement par rapport au moyen d'ancrage.

En référence à la figure 10, à l'issue de la rotation de la poutre de soutènement 40 et du moyen d'accrochage 20, le dispositif de fixation 10 se trouve dans une position repliée

La troisième réalisation représentée sur la figure 11 se distingue de la deuxième réalisation par la présence d'un moyen de rappel non pas muni d'un ressort de torsion mais d'une première bielle à fluide sous pression 104 articulée à un levier d'un organe de fixation.

Enfin, on comprend qu'il est aussi possible de combiner un organe de rappel de type ressort de torsion avec un moyen de rappel de type deuxième bielle à fluide sous pression par exemple. De même, lorsque l'on utilise deux moyens de rappel, ces deux moyens de rappel peuvent être d'un type distinct. De même, si on met en oeuvre deux organes de rappel, ces deux organes de rappel peuvent être d'un type distinct

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de fixation (10) muni d'un moyen d'accrochage (20) d'une charge externe (5) et d'un moyen de fixation (30) du moyen d'accrochage (20) à une structure porteuse (2) d'un aéronef (1), ledit moyen de fixation (30) étant pourvu d'une poutre de soutènement (40) et d'un moyen d'ancrage (50) de ladite poutre de soutènement (40) à une structure porteuse (2), ledit dispositif comportant:
- une première liaison mécanique (60) reliant ladite poutre de soutènement (40) au moyen d'ancrage (50) pour permettre un pivotement de la poutre de soutènement (40) autour d'un premier axe de pivotement (AX1),
- un moyen de liaison (70) articulé par une deuxième liaison mécanique (80) à la poutre de soutènement (40) pour permettre un pivotement autour d'un deuxième axe de pivotement (AX2) **caractérisé en ce que** : la deuxième axe étant parallèle au premier axe de pivotement (AX1) de la poutre de soutènement (40) par rapport au moyen de liaison (70), le moyen de liaison comportant une troisième liaison mécanique (90) articulant le moyen d'accrochage (20) au moyen de liaison (70) pour permettre un pivotement autour d'un troisième axe de pivotement (AX3) parallèle au premier axe de pivotement (AX1) du moyen d'accrochage (20) par rapport au moyen de liaison (70),
- ladite poutre de soutènement (40) et le moyen d'accrochage (20) étant alignés dans une position dépliée obtenue automatiquement lorsque le moyen d'accrochage (20) porte une charge externe (5), ledit dispositif de fixation (10) comporte un moyen de repliage (100) automatique pour requérir en l'absence d'un effort prédéterminé exercé par une charge sur le moyen d'accrochage (20) le pivotement de la poutre de soutènement (40) selon un premier sens (S1) par rapport à une structure porteuse (2) et le pivotement du moyen d'accrochage (20) par rapport au moyen de liaison (70) selon un deuxième sens (S2) opposé au premier sens (S1).

2. Dispositif de fixation selon la revendication 1,
**caractérisé en ce que** ladite poutre de soutènement (40) est contenue dans une premier plan (P1) parallèle à un deuxième plan (P2) contenant le moyen d'accrochage (20) dans une position repliée dudit dispositif de fixation.

3. Dispositif de fixation selon l'une quelconque des revendications 1 à 2,
**caractérisé en ce que** ledit moyen d'accrochage est à choisir dans une liste contenant un crochet-délesteur, un crochet d'élingue et une attache.

4. Dispositif de fixation selon l'une quelconque des revendications 1 à 3,
**caractérisé en ce qu'**il comporte au moins un moyen d'arrêt à choisir parmi la sélection suivante :
- une première butée pour limiter la liberté de mouvement en rotation du moyen de liaison par rapport à ladite poutre de soutènement,
- une deuxième butée pour limiter la liberté de mouvement en rotation du moyen d'accrochage par rapport au moyen de liaison,
- une troisième butée pour limiter la liberté de mouvement en rotation de la poutre de soutènement par rapport au moyen d'ancrage.

5. Dispositif de fixation selon l'une quelconque des revendications 1 à 4,
**caractérisé en ce que**, ledit moyen de repliage (100) automatique comprend un moyen de rappel (101, 102) pour ordonner le pivotement de ladite poutre de soutènement (40) selon une première vitesse de rotation et un organe de rappel (110) pour requérir le pivotement du moyen d'accrochage (20) selon une deuxième vitesse de rotation inférieure à ladite première vitesse de rotation.

6. Dispositif de fixation selon l'une quelconque des revendications 1 à 5,
**caractérisé en ce que** ladite première liaison mécanique (60) comporte d'une part un premier organe de fixation (61) coopérant avec une première extrémité (41) de la poutre de soutènement (40) et avec un premier organe d'ancrage (51) du moyen d'ancrage (50), et d'autre part un deuxième organe de fixation (62) coopérant avec une deuxième extrémité (42) de la poutre de soutènement (40) et avec un deuxième organe d'ancrage (52) du moyen d'ancrage (50), au moins un organe de fixation (61, 62) comportant un moyen de rappel (101, 102) du moyen de repliage (100) automatique pour ordonner le pivotement de ladite poutre de soutènement (40) en l'absence dudit effort prédéterminé.

7. Dispositif de fixation selon la revendication 6,
**caractérisé en ce que** ledit moyen de rappel (101, 102) comprend au moins des éléments suivants : au moins un ressort de torsion (103), une première bielle à fluide sous pression (104).

8. Dispositif de fixation selon l'une quelconque des revendications 1 à 7,
**caractérisé en ce que** ledit moyen de liaison (70) comporte une première bielle de liaison (71) et une deuxième bielle de liaison (72) qui sont articulées à la poutre de soutènement (40) respectivement par un premier axe de fixation (81) et un deuxième axe de fixation (82) de la deuxième liaison mécanique (80), chaque bielle de liaison (71, 72) comportant un moyen d'articulation (91, 92) de la troisième liaison mécanique (90) pour porter conjointement le moyen d'accrochage (20).

9. Dispositif de fixation selon l'une quelconque des revendications 1 à 8,
**caractérisé en ce que** ledit moyen de repliage (100) automatique comporte au moins un organe de rappel (110) pour requérir le pivotement du moyen d'accrochage (20) par rapport au moyen de liaison (70) selon un deuxième sens (S2) en l'absence dudit effort prédéterminé.

10. Dispositif de fixation selon la revendication 9,
**caractérisé en ce que** ledit organe de rappel (110) comprend un ressort de torsion (111) coopérant avec le moyen de liaison (70) et le moyen d'accrochage (20).

11. Dispositif de fixation selon la revendication 9,
**caractérisé en ce que** ledit organe de rappel (110) comprend une deuxième bielle à fluide sous pression (121, 122) fixée à la poutre de soutènement (40), chaque deuxième bielle à fluide sous pression (121, 122) étant reliée par un élément longiligne (125) à un galet (93) du troisième moyen de liaison (90) solidarisé au moyen d'accrochage (20).

12. Dispositif de fixation selon la revendication 11,
**caractérisé en ce que** ledit galet (93) est un cylindre à rayon variable muni d'au moins un premier rayon et un deuxième rayon, l'élément longiligne étant en contact avec ledit premier rayon lors d'une première phase de repliage et avec ledit deuxième rayon lors d'une deuxième phase de repliage, ledit premier rayon étant inférieur au deuxième rayon.

13. Aéronef (1) muni d'une structure porteuse (2) s'étendant longitudinalement d'une extrémité avant (3) vers une extrémité arrière (4) et latéralement d'un premier côté (6) vers un deuxième côté (7), ledit aéronef (1) ayant un dispositif de fixation (10) pourvu d'un moyen d'accrochage (20) et d'un moyen de fixation (30) du moyen d'accrochage (20) à ladite structure porteuse (2),
**caractérisé en ce que**, ledit dispositif de fixation étant selon l'une quelconque des revendications 1 à 12, ledit moyen de fixation (30) est pourvu d'une poutre de soutènement (40) et d'un moyen d'ancrage (50) de ladite poutre de soutènement (40) à la structure porteuse (2), le moyen de fixation (30) comportant :
- une première liaison mécanique (60) reliant ladite poutre de soutènement (40) au moyen d'ancrage (50) pour permettre un pivotement de la poutre de soutènement (40) autour d'un premier axe de pivotement (AX1) par rapport à la structure porteuse (2),
- un moyen de liaison (70) articulé par une deuxième liaison mécanique (80) à ladite poutre de soutènement (40) pour permettre un pivotement autour d'un deuxième axe de pivotement (AX2) parallèle au premier axe de pivotement (AX1) de la poutre de soutènement (40) par rapport au moyen de liaison (70), une troisième liaison mécanique (90) articulant le moyen d'accrochage (20) au moyen de liaison (70) pour permettre un pivotement autour d'un troisième axe de pivotement (AX3) parallèle au premier axe de pivotement (AX1) du moyen d'accrochage (20) par rapport au moyen de liaison (70),
- ladite poutre de soutènement (40) et le moyen d'accrochage (20) étant alignés dans une position dépliée obtenue automatiquement lorsque le moyen d'accrochage (20) porte une charge externe (5), ledit dispositif de fixation (10) comporte un moyen de repliage (100) automatique pour requérir en l'absence d'un effort prédéterminé exercé par une charge sur le moyen d'accrochage (20) le pivotement de la poutre de soutènement (40) selon un premier sens (S1) par rapport à une structure porteuse (2) et le pivotement du moyen d'accrochage (20) par rapport au moyen de liaison (70) selon un deuxième sens (S2) opposé au premier sens (S1), ladite poutre de soutènement (40) étant contenue dans une premier plan (P1) parallèle à un deuxième plan (P2) contenant le moyen d'accrochage (20) dans une position repliée.

14. Procédé d'optimisation de l'encombrement et de la traînée aérodynamique d'un dispositif de fixation (10) selon l'une quelconque des revendication 1 à 12 muni d'un moyen d'ancrage (50), d'une poutre de soutènement (40), d'une moyen de liaison et d'un moyen d'accrochage
au cours duquel, ladite poutre de soutènement (40) et le moyen d'accrochage (20) étant alignés dans une position dépliée lorsque le moyen d'accrochage (20) porte une charge externe (5) d'une masse supérieure à une masse seuil donnée, en l'absence de ladite charge externe on pivote la poutre de soutènement (40) selon un premier sens (S1) à une première vitesse de rotation et on pivote lé moyen d'accrochage (20) selon un deuxième sens (S2) opposé au premier sens (S1) à une deuxième vitesse de rotation inférieure à ladite première vitesse de rotation.

15. Procédé selon la revendication 14
**caractérisé en ce que** :
- durant une première phase, on pivote simultanément la poutre de soutènement (40), le moyen de liaison et le moyen d'accrochage jusqu'à ce que ledit moyen de liaison atteigne une première butée,
- durant une deuxième phase, on pivote simultanément la poutre de soutènement (40) et le moyen d'accrochage jusqu'à ce que ledit moyen d'accrochage atteigne une deuxième butée, et
- durant une troisième phase, on pivote la poutre de soutènement (40) jusqu'à ce que ladite poutre de soutènement atteigne une troisième butée.

## Patentansprüche

1. Befestigungsvorrichtung (10) mit einem Mittel (20) zum Aufhängen einer externen Last (5) und mit einem Mittel (30) zum Befestigen des Aufhängemittels (20) an einem Trägeraufbau (2) eines Luftfahrzeugs (1), wobei das Mittel (30) zur Befestigung mit einem Stützträger (40) und einem Mittel (50) zur Verankerung des Stützträgers (40) an einem Trägeraufbau (2) versehen ist, wobei die Vorrichtung aufweist:
- eine erste mechanische Verbindung (60), die den Stützträger (40) mit dem Verankerungsmittel (50) verbindet, um ein Verschwenken des Stützträgers (40) um eine erste Schwenkachse (AX1) zu ermöglichen,
- ein Verbindungsmittel (70), das über eine zweite mechanische Verbindung (80) an dem Stützträger (40) angelenkt ist, um ein Verschwenken um eine zweite Schwenkachse (AX2) zu ermöglichen,
**dadurch gekennzeichnet, dass**
die zweite Achse parallel zur ersten Schwenkachse (AX1) des Stützträgers (40) relativ zum Verbindungsmittel (70) verläuft, wobei das Verbindungsmittel eine dritte mechanische Verbindung (90) aufweist, die das Aufhängemittel (20) an dem Verbindungsmittel (70) anlenkt, um ein Verschwenken um eine dritte Schwenkachse (AX3) zu ermöglichen, die parallel zur ersten Achse (AX1) des Verschwenkens des Aufhängemittels (20) relativ zu dem Verbindungsmittel (70) verläuft,
- wobei der Stützträger (40) und das Aufhängemittel (20) in einer aufgeklappten Stellung ausgerichtet sind, die automatisch erhalten wird, wenn das Aufhängemittel (20) eine externe Last (5) trägt, wobei das Befestigungsmittels (10) ein Mittel (100) zum automatischen Einklappen aufweist, um in Abwesenheit einer vorbestimmten Kraft, die von einer Last auf das Aufhängemittel (20) ausgeübt wird, das Verschwenken des Stützträgers (40) in einer ersten Richtung (S1) relativ zu einem Trägeraufbau (2) auszulösen und das Verschwenken des Aufhängemittels (20) relativ zu dem Verbindungsmittel (70) in einer zweiten Richtung (S2), die zu der ersten Richtung (S1) entgegengesetzt ist, auszulösen.

2. Befestigungsvorrichtung nach Anspruch 1,
**dadurch gekennzeichnet, dass** der Stützträger (40) in einer ersten Ebene (P1) enthalten ist, die parallel zu einer zweiten Ebene (P2) verläuft, in der das Aufhängemittel (20) in einer zusammengefalteten Stellung des Befestigungsmittels enthalten ist.

3. Befestigungsvorrichtung nach einem der Ansprüche 1 bis 2,
**dadurch gekennzeichnet, dass** das Aufhängemittel aus einer Liste zu wählen ist, die einen Entlastungshaken, einen Kettengehängehaken und einen Aufhänger aufweist.

4. Befestigungsvorrichtung nach einem der Ansprüche 1 bis 3, **dadurch gekennzeichnet, dass** sie mindestens einen Stopper aufweist, der aus der folgenden Auswahl zu wählen ist:
- einem ersten Anschlag, um die Drehbeweglichkeit des Verbindungsmittels relativ zu dem Stützträger zu begrenzen,
- einem zweiten Anschlag, um die Drehbeweglichkeit des Aufhängemittels relativ zu dem Verbindungsmittel zu begrenzen,
- einem dritten Anschlag, um die Drehbeweglichkeit des Stützträgers relativ zu dem Verankerungsmittel zu begrenzen.

5. Befestigungsvorrichtung nach einem der Ansprüche 1 bis 4,
**dadurch gekennzeichnet, dass** das Mittel (100) zum automatischen Einfalten ein Rückholmittel (101, 102) aufweist, zur Veranlassung einer Schwenkbewegung des Stützträgers (40) mit einer ersten Drehgeschwindigkeit, und ein Rückholorgan (110) zum Auslösen der Verschwenkung des Aufhängemittels (20) mit einer zweiten Drehgeschwindigkeit, die kleiner ist als die erste Drehgeschwindigkeit.

6. Befestigungsvorrichtung nach einem der Ansprüche 1 bis 5,
**dadurch gekennzeichnet, dass** die erste mechanische Verbindung (60) einerseits ein erstes Befestigungsorgan (61) aufweist, welches mit einem ersten Ende (41) des Stützträgers (40) und mit einem ersten Verankerungsorgan (51) des Verankerungsmittels (50) zusammenwirkt, und andererseits ein zweites Befestigungsorgan (62) aufweist, welches mit einem zweiten Ende (42) des Stützträgers (40) und mit einem zweiten Verankerungsorgan (52) des Verankerungsmittels (50) zusammenwirkt, wobei mindestens ein Befestigungsorgan (61, 62) ein Mittel (101, 102) zum Rückholen des automatischen Einfaltmittels (100) aufweist, um das Verschwenken des Stützträgers (40) in Abwesenheit der vorbestimmten Kraft zu veranlassen.

7. Befestigungsvorrichtung nach Anspruch 6,
**dadurch gekennzeichnet, dass** das Rückholmittel (101, 102) mindestens folgende Elemente aufweist: mindestens eine Torsionsfeder (103), eine erste Steuerstange (104) mit einem Druckfluid.

8. Befestigungsvorrichtung nach einem der Ansprüche 1 bis 7,
**dadurch gekennzeichnet, dass** das Verbindungsmittel (70) eine erste Verbindungsstange (71) und eine zweite Verbindungsstange (72) aufweist, die an dem Stützträger (40) jeweils über eine erste Befestigungsachse (81) bzw. eine zweite Befestigungsachse (82) der zweiten mechanischen Verbindung (80) angelenkt sind, wobei jede Verbindungsstange (71, 72) ein Mittel (91, 92) zur Anlenkung an dem dritten mechanischen Verbindungsmittel (90) aufweist, um gemeinsam das Verankerungsmittel (20) zu tragen.

9. Befestigungsvorrichtung nach einem der Ansprüche 1 bis 8,
**dadurch gekennzeichnet, dass** das automatische Einfaltmittel (100) mindestens ein Rückholorgan (110) aufweist, um das Verschwenken des Aufhängemittels (20) relativ zu dem Verbindungsmittel (70) in einer zweiten Richtung (S2) in Abwesenheit der vorbestimmten Kraft zu veranlassen.

10. Befestigungsvorrichtung nach Anspruch 9,
**dadurch gekennzeichnet, dass** das Rückholmittel (110) eine Torsionsfeder (111) aufweist, die mit dem Verbindungsmittel (70) und dem Aufhängemittel (20) zusammenwirkt.

11. Befestigungsvorrichtung nach Anspruch 9,
**dadurch gekennzeichnet, dass** das Rückholorgan (110) eine zweite Steuerstange mit Druckfluid (121, 122) aufweist, die an dem Stützträger (40) befestigt ist, wobei jede zweite Steuerstange mit Druckfluid (121, 122) über ein längliches Element (125) mit einer Rolle (93) des dritten Verbindungsmittels (90) verbunden ist, welches an dem Aufhängemittel (20) befestigt ist.

12. Befestigungsvorrichtung nach Anspruch 11,
**dadurch gekennzeichnet, dass** die Rolle (93) ein Zylinder mit variablem Radius ist, der mit mindestens einem ersten Radius und einem zweiten Radius versehen ist, wobei das längliche Element während einer ersten Zusammenfaltphase in Kontakt mit dem ersten Radius steht, und während einer zweiten Zusammenfaltphase mit dem zweiten Radius, wobei der erste Radius kleiner ist als der zweite Radius.

13. Luftfahrzeug (1) mit einem Trägeraufbau (2), der sich längs von einem vorderen Ende (3) bis zu einem hinteren Ende (4) und quer von einer ersten Seite (6) bis zu einer zweiten Seite (7) erstreckt, wobei das Luftfahrzeug (1) eine Befestigungsvorrichtung (10) aufweist, die mit einem Aufhängemittel (20) und einem Befestigungsmittel (30) des Aufhängemittels (20) an dem Trägeraufbau (2) versehen ist,
**dadurch gekennzeichnet, dass** die Befestigungsvorrichtung gemäß einem der Ansprüche 1 bis 12 ausgebildet ist, wobei das Befestigungsmittel (30) mit einem Stützträger (40) und einem Verankerungsmittel (50) des Stützträgers (40) an dem Trägeraufbau (2) versehen ist, wobei das Befestigungsmittel (30) aufweist:
- eine erste mechanische Verbindung (60), die den Stützträger (40) mit dem Verankerungsmittel (50) verbindet, um eine Verschwenkung des Stützträgers (40) um eine erste Schwenkachse (AX1) relativ zu dem Trägeraufbau (2) zu ermöglichen,
- ein Verbindungsmittel (70), welches über eine zweite mechanische Verbindung (80) an dem Stützträger (40) angelenkt ist, um eine Verschwenkung um eine zweite Schwenkachse (AX2) zu erlauben, die parallel zur ersten Schwenkachse (AX1) des Stützträgers (40) relativ zu dem Verbindungsmittel (70) verläuft, wobei eine dritte mechanische Verbindung (90) das Verankerungsmittel (20) an dem Verbindungsmittel (70) anlenkt, um eine Verschwenkung um eine dritte Schwenkachse (AX3) zu ermöglichen, die parallel zur ersten Schwenkachse (AX1) des Verankerungsmittels (20) relativ zu dem Verbindungsmittel (70) verläuft,
- wobei der Stützträger (40) und das Aufhängemittel (20) in einer entfalteten Stellung ausgerichtet sind, die automatisch erhalten wird, wenn das Aufhängemittel (20) eine externe Last (5) trägt, wobei das Befestigungsmittel (10) ein automatisches Einfaltmittel (100) aufweist, um in Abwesenheit einer vorbestimmten Kraft, die von einer Last auf das Aufhängemittel (20) ausgeübt wird, das Verschwenken des Stützträgers (40) in einer ersten Richtung (S1) relativ zu einem Trägeraufbau (2) und das Verschwenken des Aufhängemittels (20) relativ zu einem Verbindungsmittel (70) in einer zweiten Richtung (S2), die der ersten Richtung (S1) entgegengesetzt ist, zu veranlassen, wobei der Stützträger (40) in einer ersten Ebene (P1) enthalten ist, die parallel zu einer zweiten Ebene (P2) verläuft, in der das Aufhängemittel (20) in einer zusammengefalteten Stellung enthalten ist.

14. Verfahren zur Optimierung des Platzbedarfs und des aerodynamischen Verhaltens einer Befestigungsvorrichtung (10) nach einem der Ansprüche 1 bis 12, die versehen ist mit einem Verankerungsmittel (50), einem Stützträger (40), einem Verbindungsmittel und einem Aufhängemittel, wobei während des Verfahrens der Stützträgers (40) und das Aufhängemittel (20) in einer aufgefalteten Stellung ausgerichtet sind, wenn das Aufhängemittel (20) eine externe Last (5) mit einem Gewicht trägt, das größer ist als ein vorgegebenes Schwellengewicht, wobei in Abwesenheit der externen Last der Stützträger (40) in einer ersten Richtung (S1) mit einer ersten Drehgeschwindigkeit verschwenkt wird, und das Aufhängemittel (20) in einer zweiten Richtung (S2) entgegengesetzt zur ersten Richtung (S1) mit einer zweiten Drehgeschwindigkeit verschwenkt wird, die kleiner als die erste Drehgeschwindigkeit ist.

15. Verfahren nach Anspruch 14,
**dadurch gekennzeichnet, dass**:
- während einer ersten Phase gleichzeitig der Stützträger (40), das Verbindungsmittel und das Aufhängemittel verschwenkt werden, bis das Verbindungsmittel einen ersten Anschlag erreicht,
- während einer zweiten Phase gleichzeitig der Stützträger (40) und das Aufhängemittel verschwenkt werden, bis das Aufhängemittel einen zweiten Anschlag erreicht, und
- während einer dritten Phase der Stützträger (40) verschwenkt wird, bis der Stützträger einen dritten Anschlag erreicht.

## Claims

1. Fastening device (10) provided with an attachment means (20) for attaching an external load (5) and with a fastening means (30) for fastening the attachment means (20) to a carrying structure (2) of an aircraft (1), said fastening means (30) being provided with a support beam (40) and with an anchoring means (50) for anchoring said support beam (40) to a carrying structure (2), said device comprising:
- a first mechanical connection (60) connecting said support beam (40) to the anchoring means (50) in order to enable the support beam (40) to pivot about a first pivot axis (AX1),
- a connecting means (70) articulated by a second mechanical connection (80) to the support beam (40) in order to enable a pivoting about a second pivot axis (AX2),
**characterised in that** the second axis being parallel to the first pivot axis (AX1) of the support beam (40) relative to the connecting means (70), the connecting means comprising a third mechanical connection (90) articulating the attachment means (20) to the connecting means (70) in order to enable the attachment means (20) to pivot relative to the connecting means (70) about a third pivot axis (AX3) parallel to the first pivot axis (AX1),
- with said support beam (40) and the fastening means (20) being aligned in an unfolded position obtained automatically when the attachment means (20) carries an external load (5), said fastening device (10) comprises an automatic folding means (100) for constraining, in the absence of a predetermined force exerted by a load on the attachment means (20), the support beam (40) to pivot in a first direction (S1) relative to a carrying structure (2) and the attachment means (20) to pivot relative to the connecting means (70) in a second direction (S2) opposite to the first direction (S1).

2. Fastening device according to claim 1,
**characterised in that** said support beam (40) is contained in a first plane (P1) parallel to a second plane (P2) containing the attachment means (20) in a folded position of said fastening device.

3. Fastening device according to any one of claims 1 to 2,
**characterised in that** said attachment means is chosen from a list containing a release hook, a sling hook and a fastening.

4. Fastening device according to any one of claims 1 to 3,
**characterised in that** it comprises at least one stop means chosen from the following selection:
- a first abutment for limiting the freedom of rotational movement of the connecting means relative to said support beam,
- a second abutment for limiting the freedom of rotational movement of the attachment means relative to the connecting means,
- a third abutment for limiting the freedom of rotational movement of the support beam relative to the anchoring means.

5. Fastening device according to any one of claims 1 to 4, **characterised in that** said automatic folding means (100) comprises a return means (101, 102) for urging said support beam (40) to pivot at a first rotational speed and a return member (110) for constraining the attachment means (20) to pivot at a second rotational speed less than said first rotational speed.

6. Fastening device according to any one of claims 1 to 5,
**characterised in that** said first mechanical connection (60) comprises on one side a first fastening member (61) co-operating with a first end (41) of the support beam (40) and with a first anchoring member (51) of the anchoring means (50), and on the other side a second fastening member (62) co-operating with a second end (42) of the support beam (40) and with a second anchoring member (52) of the anchoring means (50), at least one fastening member (61, 62) comprising a return means (101, 102) of the automatic folding means (100) for urging the pivoting of said support beam (40) in the absence of said predetermined force.

7. Fastening device according to claim 6,
**characterised in that** said return means (101, 102) comprises at least one of the following elements: at least one torsion spring (103), a pressurised-fluid first link (104).

8. Fastening device according to any one of claims 1 to 7,
**characterised in that** said connecting means (70) comprises a first connecting link (71) and a second connecting link (72) which are articulated to the support beam (40) respectively by a first fastening pin (81) and a second fastening pin (82) of the second mechanical connection (80), each connecting link (71, 72) comprising an articulation means (91, 92) for articulation of the third mechanical connection (90) for jointly carrying the attachment means (20).

9. Fastening device according to any one of claims 1 to 8,
**characterised in that** said automatic folding means (100) comprises at least one return member (110) for constraining the attachment means (20) to pivot relative to the connecting means (70) in a second direction (S2) in the absence of said predetermined force.

10. Fastening device according to claim 9,
**characterised in that** said return member (110) comprises a torsion spring (111) co-operating with the connecting means (70) and the attachment means (20).

11. Fastening device according to claim 9,
**characterised in that** said return member (110) comprises a pressurised-fluid second link (121, 122) fastened to the support beam (40), each pressurised-fluid second link (121, 122) being connected by an elongate element (125) to a roller (93) of the third connecting means (90) which is secured to the attachment means (20).

12. Fastening device according to claim 11,
**characterised in that** said roller (93) is a cylinder of variable radius provided with at least a first radius and a second radius, the elongate element being in contact with said first radius during a first folding stage and with said second radius during a second folding stage, said first radius being less than the second radius.

13. Aircraft (1) provided with a carrying structure (2) extending longitudinally from a front end (3) to a rear end (4) and laterally from a first side (6) to a second side (7), said aircraft (1) having a fastening device (10) provided with an attachment means (20) and with a fastening means (30) for fastening the attachment means (20) to said carrying structure (2),
**characterised in that**, with said fastening device being according to any one of claims 1 to 12, said fastening means (30) is provided with a support beam (40) and with an anchoring means (50) for anchoring said support beam (40) to the carrying structure (2), the fastening means (30) comprising:
- a first mechanical connection (60) connecting said support beam (40) to the anchoring means (50) in order to enable the support beam (40) to pivot about a first pivot axis (AX1) relative to the carrying structure (2),
- a connecting means (70) articulated by a second mechanical connection (80) to said support beam (40) in order to enable the support beam (40) to pivot relative to the connecting means (70) about a second pivot axis (AX2) parallel to the first pivot axis (AX1), a third mechanical connection (90) articulating the attachment means (20) to the connecting means (70) in order to enable the attachment means (20) to pivot relative to the connecting means (70) about a third pivot axis (AX3) parallel to the first pivot axis (AX1),
- with said support beam (40) and the fastening means (20) being aligned in an unfolded position obtained automatically when the attachment means (20) carries an external load (5), said fastening device (10) comprises an automatic folding means (100) for constraining, in the absence of a predetermined force exerted by a load on the attachment means (20), the support beam (40) to pivot in a first direction (S1) relative to a carrying structure (2) and the attachment means (20) to pivot relative to the connecting means (70) in a second direction (S2) opposite to the first direction (S1), said support beam (40) being contained in a first plane (P1) parallel to a second plane (P2) containing the attachment means (20) in a folded position.

14. Method of optimising the space requirement and the aerodynamic drag of a fastening device (10) according to any one of claims 1 to 12, provided with an anchoring means (50), a support beam (40), a connecting means and an attachment means,
during which method, with said support beam (40) and the attachment means (20) being aligned in an unfolded position when the attachment means (20) carries an external load (5) of a mass greater than a given threshold mass, in the absence of said external load the support beam (40) is pivoted in a first direction (S1) at a first rotational speed and the attachment means (20) is pivoted in a second direction (S2) opposite to the first direction (S1) at a second rotational speed less than said first rotational speed.

15. Method according to claim 14,
**characterised in that**:
- during a first stage, the support beam (40), the connecting means and the attachment means are pivoted simultaneously until said connecting means reaches a first abutment,
- during a second stage, the support beam (40) and the attachment means are pivoted simultaneously until said attachment means reaches a second abutment, and
- during a third stage, the support beam (40) is pivoted until said support beam reaches a third abutment.
